# EUROPEAN PATENT SPECIFICATION

(11) **EP 1 271 894 B1**
(45) Date of publication and mention of the grant of the patent: **04.05.2005**
(21) Application number: 01902844.8
(22) Date of filing: 13.02.2001
(51) Int. Cl.: H04L 29/08, H04L 12/28, H04Q 7/22, H04L 12/56

(54) **PACKET TRANSMITTER UNIT, PACKET RECEIVER UNIT AND PACKET TRANSMISSION SYSTEM**
PAKETSENDEEINHEIT, PAKETEMPFANGSEINHEIT UND PAKETÜBERTRAGUNGSSYSTEM
EMETTEUR DE PAQUETS, RECEPTEUR DE PAQUETS ET SYSTEME D'EMISSION DE PAQUETS

(43) Date of publication of application: 02.01.2003
(73) Proprietor: MITSUBISHI DENKI KABUSHIKI KAISHA, Tokyo 100-8310 (JP)
(72) Inventor: SUZUKI, Kuniyuki Mitsubishi Denki Kabushiki K., Tokyo 100-8310 (JP); TAKANO, Michiaki Mitsubishi Denki Kabushiki K., Tokyo 100-8310 (JP); YAMAZAKI, Takuya Mitsubishi Denki Kabushiki K., Tokyo 100-8310 (JP); FUJIHARA, Nobuo Mitsubishi Denki Kabushiki K., Tokyo 100-8310 (JP); ABE, Minoru Mitsubishi Denki Kabushiki Kaisha, Tokyo 100-8310 (JP); DUAN, Jinsong Mitsubishi Denki Kabushiki Kaisha, Tokyo 100-8310 (JP); YAMAGUCHI, Nobuyasu Mitsubishi Denki Kabushiki K., Tokyo 100-8310 (JP)
(74) Representative: Sajda, Wolf E., Dipl.-Phys.
(86) International application number: PCT/JP2001/000984
(87) International publication number: WO 2002/065734

(56) References cited:
- JP-A- 8 032 598
- JP-A- 10 136 053
- JP-A- 11 046 217
- JP-A- 11 215 136
- LUCENT TECHNOLOGIES: "TSG-RAN#17(00)1382:Asynchronous and Adaptive IR for HSDPA" 3GPPP TSG RAN WORKING GROUP 1, 25 November 2000 (2000-11-25), XP002190696 Retrieved from the Internet: <URL:www.3gpp.org> [retrieved on 2000-11-25]
- LUCENT 3GPP TSG RAN WG1 TSGR1 # 17(00)1384: "Text proposal for the HSDPA technical report TSGR1 # 17(00)1384" 3GPPP TSG RAN WORKING GROUP 1, 21 - 24 November 2000, XP002235321
- AYANOGLU E ET AL: "AIRMAIL: A LINK-LAYER PROTOCOL FOR WIRELESS NETWORKS" WIRELESS NETWORKS, ACM, US, vol. 1, no. 1, 1 February 1995 (1995-02-01), pages 47-59, XP000503720 ISSN: 1022-0038
- BENELLI G ET AL: "NEW MODIFIED STOP-AND-WAIT ARQ PROTOCOLS FOR MOBILE COMMUNICATIONS" WIRELESS PERSONAL COMMUNICATIONS, KLUWER ACADEMIC PUBLISHERS, NL, vol. 1, no. 2, 1994, pages 117-126, XP000511623 ISSN: 0929-6212

## Description

### TECHNICAL FIELD

The present invention relates to a wireless packet transmitting device, a wireless packet receiving device and a wireless packet transmission system for fast packet transmission or reception.

### BACKGROUND ART

Of conventional packet transmission systems, the S & W system (Stop & Wait system) is regarded as promising from the viewpoint of speedups in packet transmission.

But the system requires decoding (turbo decoding) with high error correcting power, inevitably increasing the computational complexity for decoding in the packet receiving device. Accordingly, an identification signal indicating the result of data decoding (ACK signal or NACK signal) cannot quickly be sent back to the transmitting side.

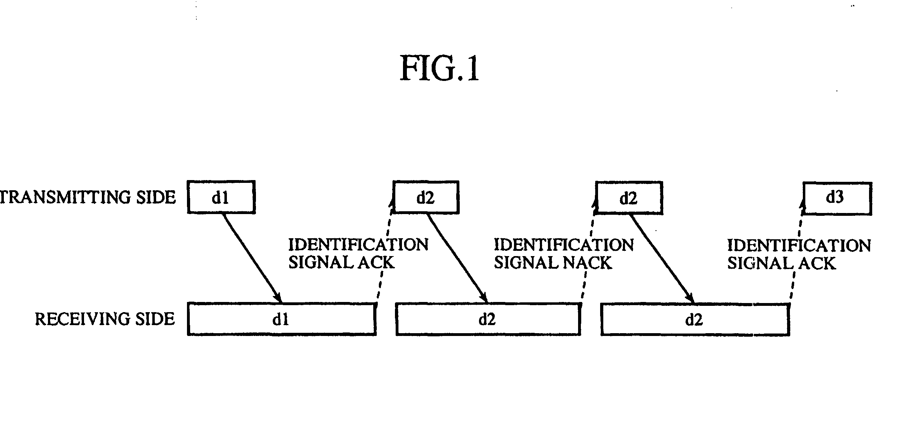

Fig. 1 is an explanatory diagram showing ARQ of a conventional packet transmission system. As is evident from Fig. 1, the packet receiving device transmits an identification signal to the packet transmitting device upon completion of decoding of data. When receiving the ACK signal, the packet transmitting device transmits the next data to the packet receiving device, whereas when receiving the NACK signal, the packet transmitting device retransmits the immediately previous data to the packet receiving device.

Since the conventional packet transmission system has such a configuration as mentioned above, no identification signal is sent to the packet transmitting device unless decoding of data is completed.

After data have been decoded to some extent, it can be decided whether the decoding will be successful or not, as for example in the 3GPP norm for HSDPA (High Speed Downlink Packet Access), see for example TS34.108, wherein a 16bit CRC is assigned to every 354 bits and in a given time slot a block of, for example, 12 subblocks of (354 + 16) bits are sent, allowing the receiver to determine as early as possible the computing of the CRC of the first of the 12 subblocks whether the decoding of the whole time slot and its 12 subblocks will be successful or not. Accordingly, in the prior art, even if it is apparent that decoding of data will not be successful, retransmission of data cannot be requested unless time consuming error correction or similar decoding is performed; this constitutes an obstacle to speeding up the packet transmission.

From the document Benelli et al. "NEW MODIFIED STOP AND WAIT ARQ PROTOCOLS FOR MOBILE COMMUNICATIONS", published in WIRELESS PERSONAL COMMUNICATIONS, KLUWER ACADEMIC PUBLISHERS, NL, Vol. 1, No. 2, 1994, pages 117 to 126, XP000511623 ISSN: 0929-6212 an improved ARQ protocol is known where, in a first transmission cycle, a number of code words 1 to j is sent. Each of these code words is acknowledged or negatively acknowledged on the receiving side. At the end of a transmission cycle, all negatively acknowledged code words are retransmitted.

If desired, the length of the repeated transmission cycle is maintained although the number of code words sent is reduced as acknowledged code words are not retransmitted. Instead, negatively acknowledged code words are multiplied to improve the probability of a correct reception by redundancy. Hence, this method is unable to re-send any data prior to the end of the first transmission cycle.

The present invention is intended to solve the above problem, and has for its object to provide a wireless packet transmitting device, a wireless packet receiving device and a wireless packet transmission system that permit speedups of the packet transmission.

### DISCLOSURE OF THE INVENTION

The wireless packet transmitting device according to the present invention comprises the features of claim 1.

This arrangement allows efficient transmission of data, and hence permits speedups of the packet transmission.

The wireless packet receiving device according to the present invention comprises the features of claim 2.

The wireless packet transmission system comprises both the transmitting and the receiving device according to claim 1 and 2.

According to an aspect of the present invention, the likelihood of success is decided based on the result of the part of the first data by the first decoding part. According to another aspect of the invention, the likelihood of success is decided based on the result by referring to a check bit, the result of decoding of transport format combination indicator, TFCI, or the result of reception of a known pattern to decide whether the data have been received successfully or not by the receiving means.

According to yet another aspect of the present invention, the likelihood of success is decided based on quality information about the data including a correlation value of the data obtained by execution of de-spreading, receiving field intensity, SIR, and distance from ideal amplitude or ideal phase at the time of multiple modulation received by the receiving means.

With these embodiments, when the likelihood of ultimate success in data decoding is very low, it is possible to request retransmission of the data concerned prior to completion of the ultimate decoding. It also ensures reception of correct data.

According to another aspect of the present invention, transmission of the first identification signals is further determined in consideration of processing capability of the first and second decoding parts. This scheme permits reduction of the amount of storage in the packet receiving device.

### BRIEF DESCRIPTION OF THE DRAWINGS

Fig. 1 is an explanatory diagram showing ARQ of a conventional packet transmission system.
Fig. 2 is a block diagram illustrating a packet transmitting device according to Embodiment 1 of the present invention.
Fig. 3 is a block diagram illustrating a packet receiving device according to Embodiment 1 of the present invention.
Fig. 4 is a flowchart showing the contents of processing in a packet transmission system according to Embodiment 1 of the present invention.
Fig. 5 is a flowchart showing the contents of processing in a packet transmission system according to Embodiment 1 of the present invention.
Fig. 6 is an explanatory diagram showing ARQ of the packet transmission system.
Fig. 7 is a flowchart showing the contents of processing in a packet transmission system according to Embodiment 3 of the present invention.

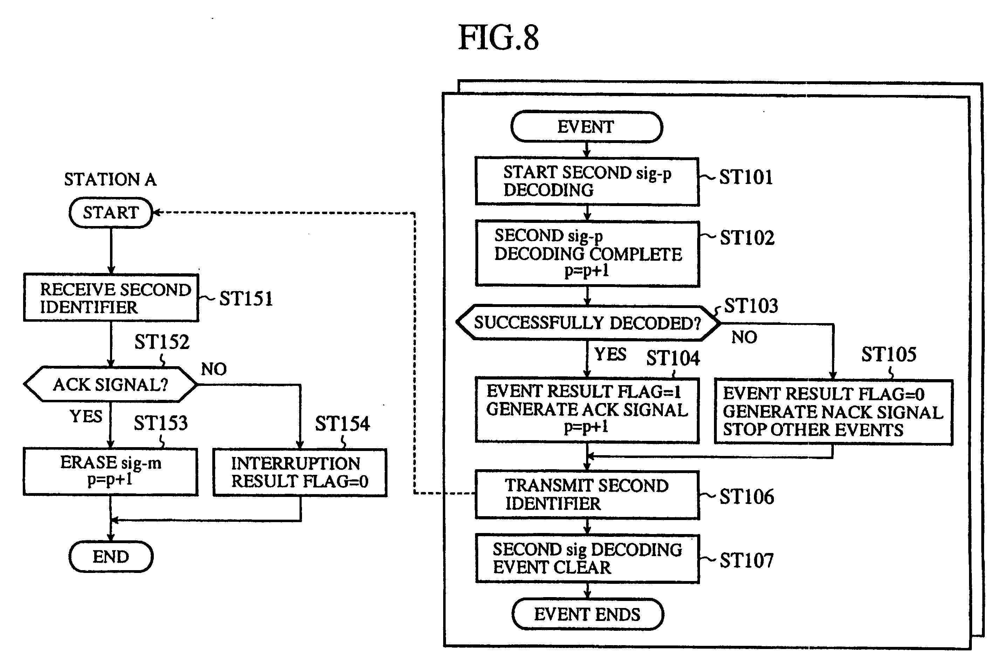

Fig. 8 is a flowchart showing the contents of processing in a packet transmission system according to Embodiment 3 of the present invention.
Fig. 9 is an explanatory diagram showing ARQ of the packet transmission system.
Fig. 10 is a flowchart showing the contents of processing in a packet transmission system according to Embodiment 4 of the present invention.

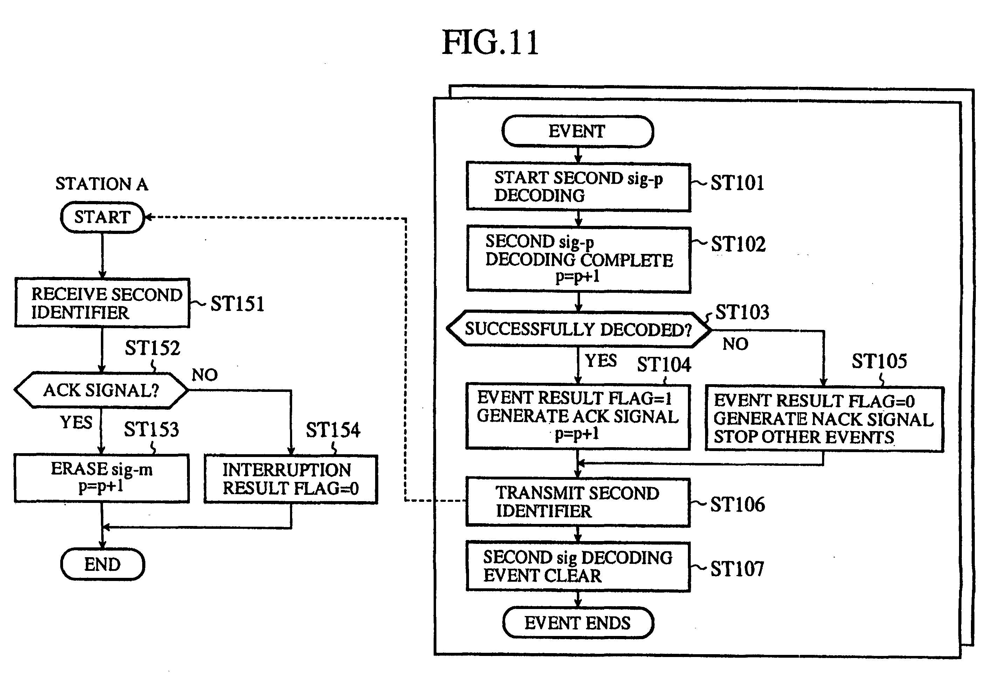

Fig. 11 is a flowchart showing the contents of processing in a packet transmission system according to Embodiment 4 of the present invention.

### BEST MODE FOR CARRYING OUT THE INVENTION

To facilitate a better understanding of the present invention, the best mode for carrying out the invention will hereinafter be described with reference to the accompanying drawings.

### EMBODIMENT 1

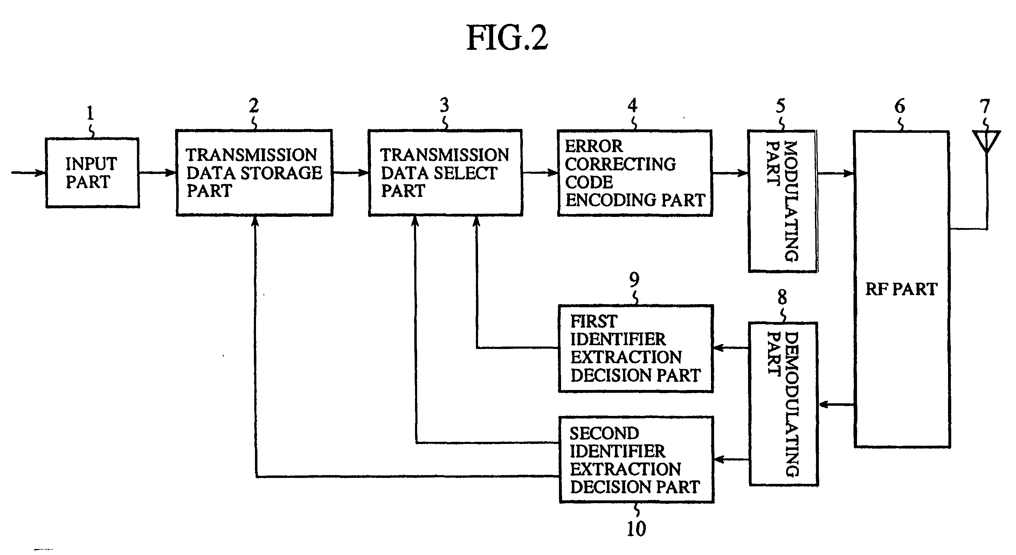

Fig. 2 is a block diagram illustrating a packet transmitting device according to Embodiment 1 of the present invention. In Fig. 2, reference numeral 1 denotes an input part for inputting data; 2 denotes a transmission data storage part for storing the data input via the input part 1; 3 denotes a transmission data select part for selecting data to be transmitted among from the pieces of data stored in the transmission data storage part 2; 4 denotes an error correcting code part for encoding the data selected by the transmission data select part 3; 5 denotes a modulating part for modulating the data encoded by the error correcting code part 4;6 denotes an RF part for transmitting the modulated wave from the modulating part 5 via an antenna 7; and 7 denotes the antenna. Incidentally, the input part 1, the transmission data storage part 2, the transmission data select part 3, the error correcting code part 4, the modulating part 5, the RF part 6 and the antenna 7 constitute transmitting means.

Reference numeral 8 denotes a demodulating part that demodulates a first or second identification signal when the RF part 6 receives it from a packet receiving device; 9 denotes a first identifier extraction decision part (first control means) that, when the first or second identification signal demodulated by the demodulating part 8 is an ACK signal, instructs the transmission data select part 3 to transmit the next data but, when the first identification signal is an NACK signal, instructs the transmission data select part 3 to retransmit the data concerned; and 10 denotes a second identifier extraction decision part (second control means) that, when the second identification signal demodulated by the demodulating part 8 is an ACK signal, instructs the transmission data storage part 2 to discard the data concerned, but when the first identification signal is an NACK signal, instructs the transmission data select part 3 to retransmit the data concerned.

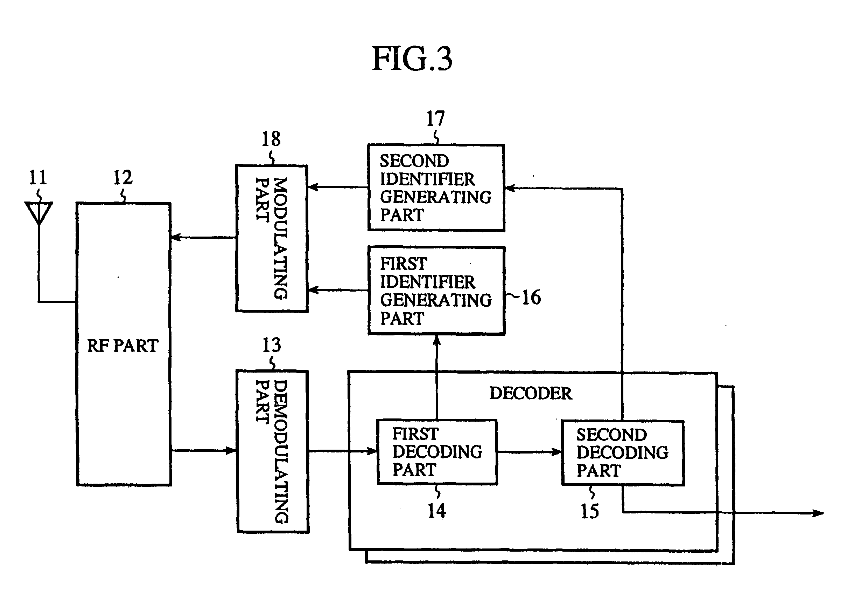

Fig. 3 is a block diagram illustrating a packet receiving device according to Embodiment 1 of the present invention. In Fig. 3, reference numeral 11 denotes an antenna 12 denotes an RF part for receiving data sent from the packet transmitting device; and 13 denotes a demodulating part for demodulating the data received by the RF part 12. Incidentally, the antenna 11, the RF part 12 and the demodulating part 13 constitute receiving means.

Reference numeral 14 denotes a first decoding part that decodes partway the data demodulated by the demodulating part 13; and 15 denotes a second decoding part that starts decoding following the first decoding part 14 and obtains the ultimate result of decoding. Incidentally, the first and second decoding parts 14 and 15 constitute a decoder (decoding means).

Reference numeral 16 denotes a first identifier generating part that generates a first identification signal based on the result of decoding by the first decoding part 14; 17 denotes a second identifier generating part that generates a second identification signal based on the result of decoding by the second decoding part 15; and 18 denotes a modulating part which modulates the first or second identification signal. Incidentally, the antenna 11, the RF part 12, the first identifier generating part 16, the second identifier generating part 17 and the modulating part 18 constitute identification signal generating means.

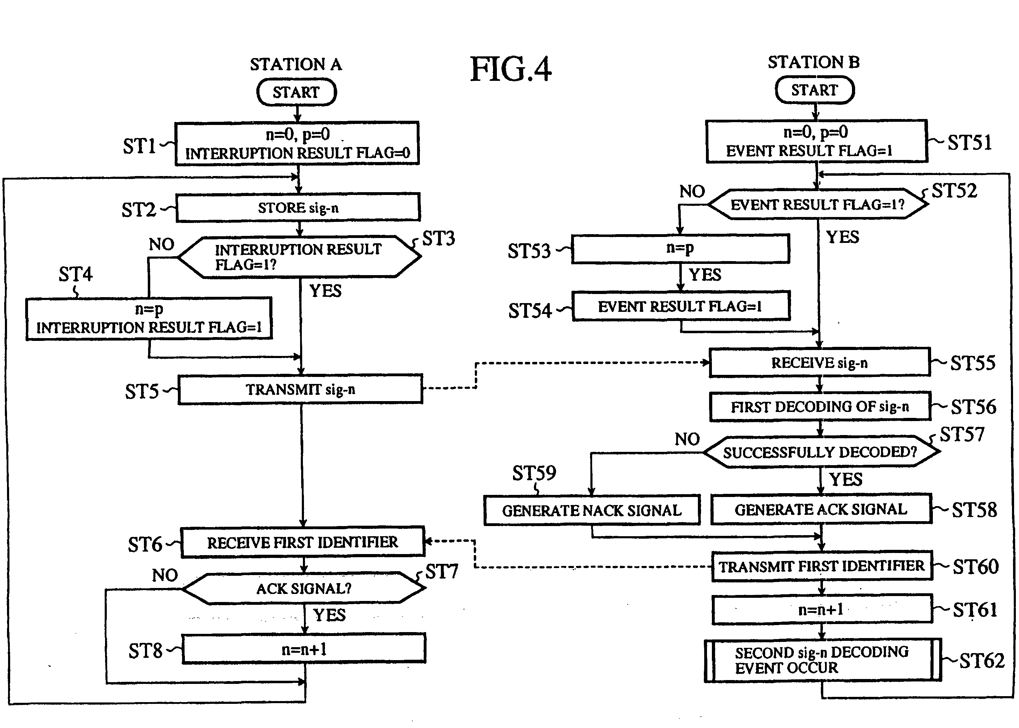

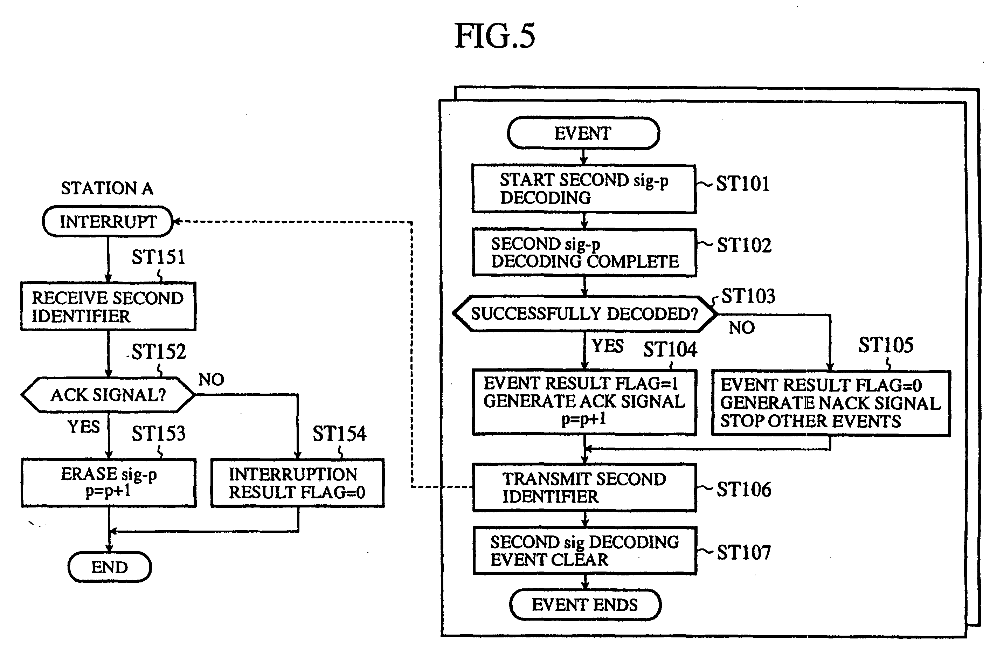

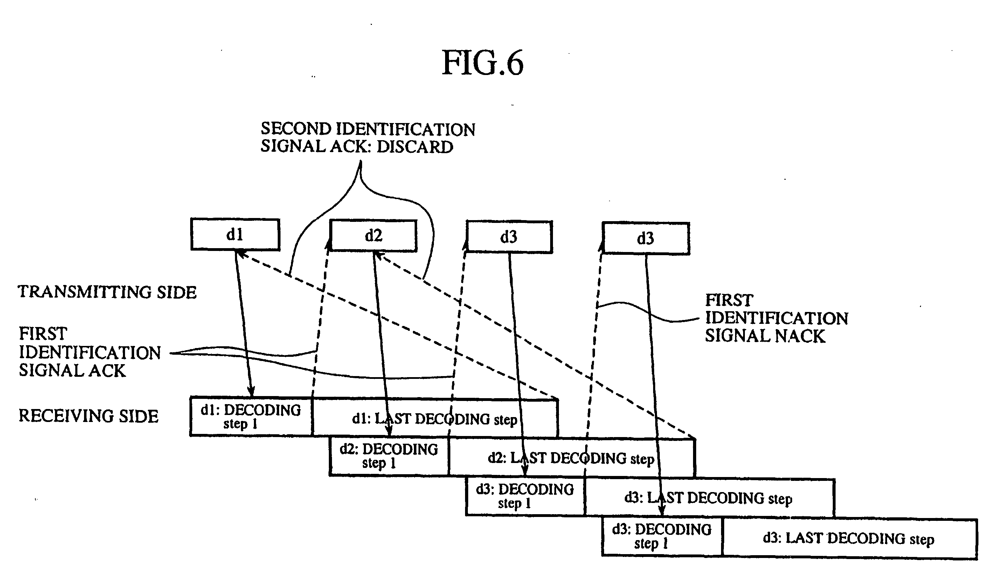

Figs. 4 and 5 are flowcharts showing the contents of processing in the packet transmission system according to Embodiment 1 of the present invention, and Fig. 6 is an explanatory diagram showing ARQ of the packet transmission system.

Next, the operation of this embodiment will be described below.

Upon input of data to the input part 1 of the packet transmitting device, the transmission data storage part 2 stores the data (steps ST1, ST2). The transmission data select part 3 selects the data to be sent from among the pieces of data stored in the transmission data storage part 2. For convenience of explanation, let it be assumed that data sig-n is selected.

The error correcting code part 4 encodes the data selected by the transmission select part 3, then the modulating part 5 modes the data encoded by the error correcting code part 4, and the RF part 6 radios the modulated wave from the modulating part 5 via the antenna 7 (steps ST3 to ST5).

On the other hand, the RF part 12 of the packet receiving device receives the data sent from the packet transmitting device, and the demodulating part 13 demodulates the data received by the RF part 12 (step ST55). For the purpose of generating a correct identification signal, the packet receiving device performs initialization of various variables prior to receiving data (steps ST51 to ST54).

The first decoding part 14 decodes partway the data demodulated by the demodulating part 13 (step ST56).

The first identifier generating part 16 refers to a check bit such as CRC to decide whether the decoding carried out partway is successful (step ST57). When the decoding is successful, the first identifier generating part generates an ACK signal as the first identification signal as depicted in Fig. 6 (step ST58). On the other hand, when the decoding is unsuccessful, the first identifier generating part generates an NACK signal as the first identification signal (step ST59) since further decoding is meaningless.

While in the above the first identifier generating part is described to refer to the check bit like CRC, the invention is not limited specifically thereto but may also be adapted to refer to, for instance, the result of decoding of TFCI (Transport Format combination Indicator) transmitting channel multiplex information by 3GPP (3^{rd} Generation Partnership Project) specification, or the result of reception of a known pattern.

The modulating part 18 modulates the first identification signal generated by the first identifier generating part 16, and the RF part 12 transmits the modulated wave from the modulating part 18 via the antenna 11 (step ST60).

The demodulating part 8 of the packet receiving device demodulates the first identification signal that the RF part 6 receives from the packet receiving device (step ST6).

The first identifier extraction decision part 9 decides whether the first identification signal demodulated by the demodulating part 8 is an ACK signal or NACK signal (step ST7).

When the first identification signal is an ACK signal, the first identifier extraction decision part instructs the transmission data select part 3 to transmit the next data (step ST8). On the other had, when the first identification signal is an NACK signal, the first identifier extraction decision part instructs the transmission data select part 3 to retransmit the data concerned.

Incidentally, in the case where plural decoders are prepared which constitute the first decoding part 14 and the second decoding part 15 in the packet receiving device (three decoders in the example of Fig. 6), assuming that a first one of the decoders performs the above-mentioned decoding, the packet transmitting device transmits the next data or the immediately previous data to an (i+1)-th decoder. In the Fig. 6 example, decoding of data d3 is unsuccessful and is retransmitted.

When the first identifier extraction decision part 9 generates and transmits the first identification signal, the second decoding part 15 of the packet receiving device resumes decoding following the first decoding part 14, obtaining the ultimate result of decoding (steps ST61, ST62, ST101, ST102).

The second identifier generating part 17 decides whether the ultimate decoding is successful or not (step ST103). When the decoding is successful, the second identifier generating part generates an ACK signal as the second identification signal as shown in Fig. 6 (step ST104). On the other hand, when the decoding is unsuccessful, the second identifier generating part generates an NACK signal as the second identification signal (step ST105).

The modulating part 18 modulates the second identification signal generated by the second identifier generating part 17, and the RF part 12 transmits the modulated wave from the modulating part 18 via the antenna 11 (steps ST106, ST1 07).

The demodulating part 8 of the packet transmitting device demodulates the second identification signal the RF part 6 receives from the packet receiving device (step ST151).

The second identifier extraction decision part 10 decides whether the second identification signal demodulated by the demodulating part 8 is an ACK signal or NACK signal (step ST152).

When the second identification signal is an ACK signal, the second identifier extraction decision part instructs the transmission data storage part 2 to discard the data concerned (step ST153). On the other hand, when the second identification signal is an NACK signal, the second identifier extraction decision part instructs the transmission data select part 3 to retransmit the data concerned (step ST154).

As is evident from the above, according to Embodiment 1, upon completion of decoding by the first decoding part, the first identification signal indicating whether to permit the transmission of the next data is sent to the packet transmitting device; hence, when the whole decoding is very likely to fail, it is possible to request retransmission of the data concerned before the second decoding part 15 starts decoding. This provides increased packet transmission efficiency and hence allows speedups of packet transmission.

### EMBODIMENT 2

While Embodiment 1 has been described to generate the first identification signal based on the intermediate result of decoding, the first identification signal may be generated based on quality information about the data received by the RF part 12.

Provision is made to generate the first identification signal, for example, by referring to the correlation value of received data obtained by the execution of de-spreading, the receiving field intensity, SIR, or the distance from ideal amplitude/ideal phase at the time of multilevel modulation.

By referring to the data quality information as mentioned above, it is possible, as is the case with Embodiment 1, to decide the likelihood of success in the ultimate decoding prior to proceeding to the ultimate decoding.

### EMBODIMENT 3

While Embodiment 1 has been described to generate the first identification signal based on the intermediate result of decoding, provision may be made to determine the transmission of the first identification signal taking into consideration of the decoding power of the decoders forming the first and second decoding parts 14 and 15.

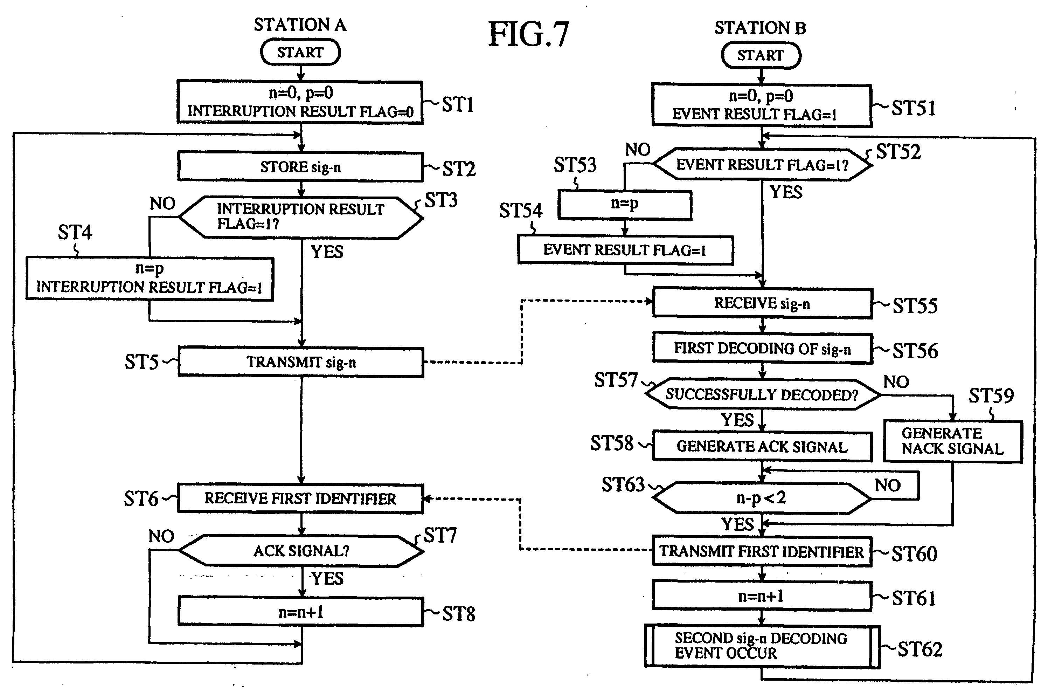

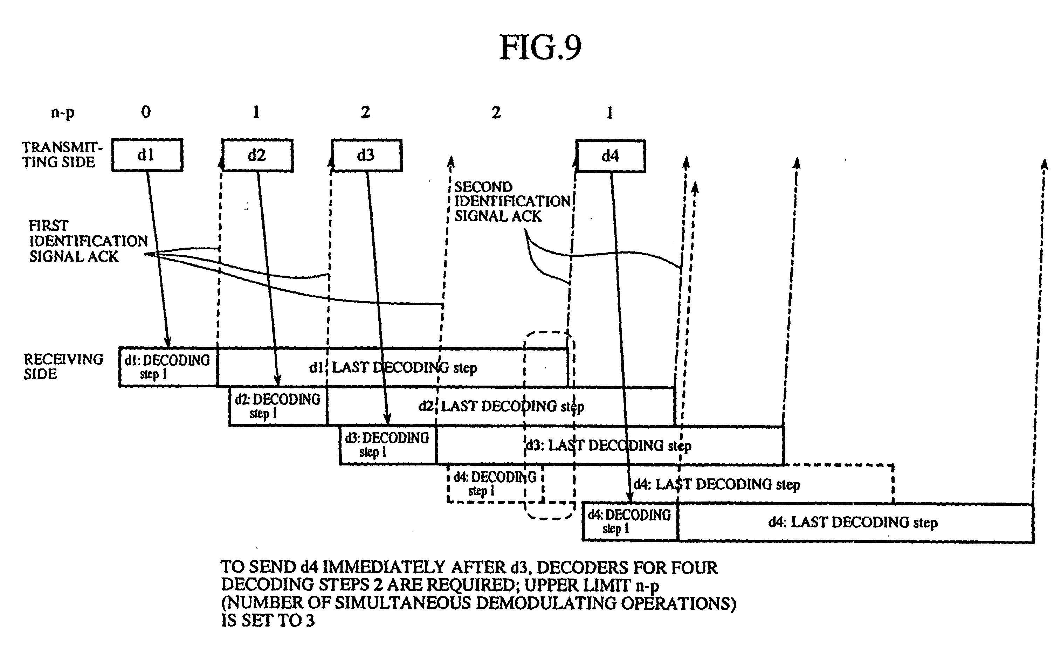

For instance, when plural decoders are prepared, it is decided whether there is present a decoder currently in OFF state (step ST63 in Fig. 7), and only when such an OFF-state decoder, the first identification signal is sent to the packet transmitting device (see Fig. 9).

This scheme permits reduction of the amount of storage in the packet receiving device.

### EMBODIMENT 4

While Embodiment 1 has been described to generate the first identification signal based on the intermediate result of decoding, provision may be made to instruct the transmission of data only when the packet receiving device is currently capable of decoding.

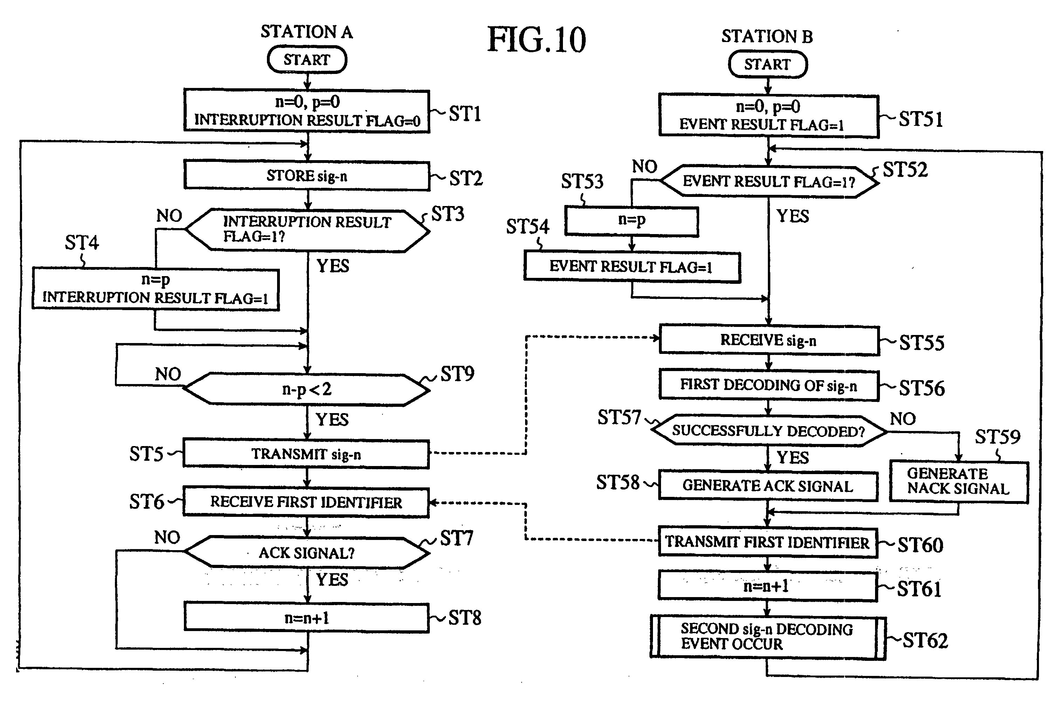

For instance, when plural decoders are prepared, it is decided whether there is present a decoder currently in OFF state (step ST9 in Fig. 10), and only when such an OFF-state decoder, the transmission of data is instructed.

This scheme also permits reduction of the amount of storage in the packet receiving device.

### INDUSTRIAL APPLICABILITY

As described above, the packet transmission system according to the present invention and the associated devices effectively allow reduction of decoding of no use and hence permit speedups of the packet transmission.

## Claims

1. A wireless packet transmitting device, to operate with a wireless packet receiving device according to claim 2, comprising:
- a transmission data storing part (2) for storing data to be transmitted;
- a transmission data select part (3) for selecting data to be transmitted among pieces of data stored in the transmission data storage part (2);
- transmitting means (6) for transmitting a first data selected by the transmission data select part (3) to the packet receiving device;
- first control means (9) for receiving a first identification signal sent from the packet receiving device, instructing the transmitting means (6) to transmit the next data selected by the transmission data select part (3) when the first identification signal is indicative of permission to transmit the next data, and instructing the transmitting means (6) to retransmit the first data selected by the transmission data select part (3) when the first identification signal is indicative of rejection of transmission of the next data; and
- second control means (10) for receiving a second identification signal sent from the wireless packet receiving device, discarding the first data selected first when the second identification signal is indicative of success in ultimate decoding of the entire first data, and instructing the transmitting means (6) to retransmit the first data when the second identification signal is indicative of failure in the entire decoding.

2. A wireless packet receiving device, to operate with a wireless packet transmitting device according to claim 1, comprising:
- receiving means (12) for receiving a first data sent from the packet transmitting device;
- a first decoding part (14) for partly decoding the data received by the receiving means (12);
- a second decoding part (15) for decoding the data not decoded by the first decoding part (14) and obtaining the ultimate decoded signal;
- a first identifier generating part (16) having means for deciding on the likelihood of success in the entire decoding of the first data received by the receiving means (12), having means for generating a first identification signal indicative of whether transmission of the next data to the data received by the receiving means (12) is permitted or if retransmission of the first data is needed based on the likelihood and transmitting the generated first identification signal to the wireless packet transmitting device; and
- a second identifier generating part (17) for generating a second identification signal indicative of whether decoding of the first data is successful or not after completion of the decoding by the second decoding part (15) and transmitting the generated second identification signal to the packet transmitting device, based on the ultimate result of decoding by the second decoding part (15).

3. A wireless packet transmission system,
**characterized in that** it comprises a wireless packet transmitting device according to claim 1 and a wireless packet receiving device according to claim 2.

4. The packet receiving device according to claim 2,
**characterized in that** the likelihood of success is decided based on the result of the part of the first data by the first decoding part (14).

5. The packet receiving device according to claim 2,
**characterized in that** the likelihood of success is decided based on the result by referring to a check bit, the result of decoding of Transport Format Combination Indicator, TFCI, or the result of reception of a known pattern to decide whether the data have been received successfully or not by the receiving means (12).

6. The packet receiving device according to claim 2,
**characterized in that** the likelihood of success is decided based on quality information about the data including a correlation value of the data obtained by execution of de-spreading, receiving field intensity, SIR, and distance from ideal amplitude or ideal phase at the time of multiple modulation received by the receiving means (12).

7. The packet receiving device according to claim 2,
**characterized in that** transmission of the first identification signal is further determined in consideration of processing capability of the first and second decoding parts (14, 15).

## Patentansprüche

1. Drahtlose Paketsendevorrichtung, um mit einer drahtlosen Paketempfangsvorrichtung nach Anspruch 2 zusammenzuarbeiten, wobei die Paketsendevorrichtung folgendes aufweist:
- einen Sendedatenspeicherbereich (2) zum Speichern von zu sendenden Daten;
- einen Sendedatenwählbereich (3) zum Auswählen von zu sendenden Daten aus in dem Sendedatenspeicherbereich (2) gespeicherten Datenelementen;
- eine Sendeeinrichtung (6) zum Senden von von dem Sendedatenwählbereich (3) ausgewählten ersten Daten an die Paketempfangsvorrichtung;
- eine erste Steuereinrichtung (9) zum Empfangen eines von der Paketempfangsvorrichtung gesendeten ersten Kennungssignals, zum Anweisen der Sendeeinrichtung (6), die nächstfolgenden von dem Sendedatenwählbereich (3) ausgewählten Daten zu senden, wenn das erste Kennungssignal die Erlaubnis zum Senden der die nächstfolgenden Daten anzeigt, und zum Anweisen der Sendeeinrichtung (6), die von dem ersten Sendedatenwählbereich (3) ausgewählten ersten Daten erneut zu senden, wenn das erste Kennungssignal die Ablehnung des Sendens der nächstfolgenden Daten anzeigt; und
- eine zweite Steuereinrichtung (10) zum Empfangen eines von der drahtlosen Paketempfangsvorrichtung gesendeten zweiten Kennungssignals, zum Verwerfen der zuerst ausgewählten ersten Daten, wenn das zweite Kennungssignal einen Erfolg beim endgültigen Decodieren der gesamten ersten Daten anzeigt, und zum Anweisen der Sendeeinrichtung (6), die ersten Daten erneut zu senden, wenn das zweite Kennungssignal einen Mißerfolg bei der Gesamtdecodierung anzeigt.

2. Drahtlose Paketempfangsvorrichtung, um mit einer drahtlosen Paketsendevorrichtung nach Anspruch 1 zusammenzuarbeiten, wobei die Paketempfangsvorrichtung folgendes aufweist:
- eine Empfangseinrichtung (12) zum Empfangen von von der Paketsendevorrichtung gesendeten ersten Daten;
- einen ersten Decodierbereich (14) zum teilweisen Decodieren der von der Empfangseinrichtung (12) empfangenen Daten;
- einen zweiten Decodierbereich (15) zum Decodieren der von dem ersten Decodierbereich (14) nicht decodierten Daten und zum Erhalten des endgültigen decodierten Signals;
- einen ersten Kennungserzeugungsbereich (16), der folgendes aufweist: eine Einrichtung, um über die Wahrscheinlichkeit eines Erfolgs bei der Gesamtdecodierung der von der Empfangseinrichtung (12) empfangenen ersten Daten zu entscheiden, eine Einrichtung zum Erzeugen eines ersten Kennungssignals, das anzeigt, ob das Senden der auf die von der Empfangseinrichtung (12) empfangenen Daten nächstfolgenden Daten zugelassen wird oder ob ein erneutes Senden der ersten Daten auf der Basis der Wahrscheinlichkeit erforderlich ist, und zum Senden des erzeugten ersten Kennungssignals an die drahtlose Paketsendevorrichtung; und
- einen zweiten Kennungserzeugungsbereich (17) zum Erzeugen eines zweiten Kennungssignals, das anzeigt, ob das Decodieren der ersten Daten nach Vervollständigung des Decodierens durch den zweiten Decodierbereich (15) erfolgreich ist oder nicht, und zum Senden des erzeugten zweiten Kennungssignals an die Paketsendevorrichtung auf der Basis des endgültigen Ergebnisses des Decodierens durch den zweiten Decodierbereich (15).

3. Drahtloses Paketsendesystem,
**dadurch gekennzeichnet,**
**daß** es eine drahtlose Paketsendevorrichtung nach Anspruch 1 und eine drahtlose Paketempfangsvorrichtung nach Anspruch 2 aufweist.

4. Paketempfangsvorrichtung nach Anspruch 2,
**dadurch gekennzeichnet,**
**daß** die Wahrscheinlichkeit eines Erfolgs auf der Basis des Ergebnisses des Teils der ersten Daten von dem ersten Decodierbereich (14) bestimmt wird.

5. Paketempfangsvorrichtung nach Anspruch 2,
**dadurch gekennzeichnet,**
**daß** die Wahrscheinlichkeit eines Erfolgs auf der Basis von dem Ergebnis durch Bezugnahme auf ein Prüfbit, dem Ergebnis des Decodierens eines Transport Format Combination Indicator, TFCI, oder dem Ergebnis des Empfangs eines bekannten Musters bestimmt wird, um zu entscheiden, ob die Daten von der Empfangseinrichtung (12) erfolgreich empfangen worden sind oder nicht.

6. Paketempfangsvorrichtung nach Anspruch 2,
**dadurch gekennzeichnet,**
**daß** die Wahrscheinlichkeit eines Erfolgs auf der Basis einer Güteinformation über die von der Empfangseinrichtung (12) empfangenen Daten, einschließlich eines Korrelationswertes der Daten, der durch Ausführen einer Entspreizung erhalten wird, der Empfangsfeldstärke, SIR, und der Distanz von der idealen Amplitude oder idealen Phase zum Zeitpunkt einer Mehrfachmodulation bestimmt wird.

7. Paketempfangsvorrichtung nach Anspruch 2,
**dadurch gekennzeichnet,**
**daß** das Senden des ersten Kennungssignals ferner unter Berücksichtigung des Verarbeitungsvermögens des ersten und des zweiten Decodierbereichs (14, 15) bestimmt wird.

## Revendications

1. Dispositif d'émission de paquets sans fil, destiné à être mis en oeuvre avec un dispositif de réception de paquets sans fil selon la revendication 2, comprenant :
- une partie de mémorisation de données d'émission (2) pour mémoriser des données à émettre ;
- une partie de sélection de données d'émission (3) pour sélectionner des données à émettre parmi des éléments de données mémorisés dans la partie de mémorisation de données d'émission (2) ;
- des moyens d'émission (6) pour émettre des premières données sélectionnées par la partie de sélection de données d'émission (3) vers le dispositif de réception de paquets ;
- des premiers moyens de commande (9) pour recevoir un premier signal d'identification envoyé par le dispositif de réception de paquets, pour demander aux moyens d'émission (6) d'émettre les données suivantes sélectionnées par la partie de sélection de données d'émission (3) lorsque le premier signal d'identification indique une autorisation d'émettre les données suivantes, et pour demander aux moyens d'émission (6) de réémettre les premières données sélectionnées par la partie de sélection de données d'émission (3) lorsque le premier signal d'identification indique un rejet d'émission des données suivantes ; et
- des deuxièmes moyens de commande (10) pour recevoir un deuxième signal d'identification envoyé par le dispositif de réception de paquets sans fil, pour écarter les premières données sélectionnées en premier lorsque le deuxième signal d'identification indique un succès lors du décodage final des premières données entières, et pour demander aux moyens d'émission (6) de réémettre les premières données lorsque le deuxième signal d'identification indique un échec du décodage entier.

2. Dispositif de réception de paquets sans fil, destiné à être mis en oeuvre avec un dispositif d'émission de paquets sans fil selon la revendication 1, comprenant :
- des moyens de réception (12) pour recevoir des premières données envoyées par le dispositif d'émission de paquets ;
- une première partie de décodage (14) pour décoder partiellement les données reçues par les moyens de réception (12) ;
- une deuxième partie de décodage (15) pour décoder les données non décodées par la première partie de décodage (14) et pour obtenir le signal décodé final ;
- une première partie de génération d'identificateur (16) comportant des moyens pour décider de la vraisemblance de réussite du décodage entier des premières données reçues par les moyens de réception (12), comportant des moyens pour générer un premier signal d'identification indicatif du fait que l'émission des données qui suivent les données reçues par les moyens de réception (12) est autorisée ou qu'une réémission des premières données est nécessaire sur la base de la vraisemblance et émettre le premier signal d'identification généré vers le dispositif d'émission de paquets sans fil ; et
- une deuxième partie de génération d'identificateur (17) pour générer un deuxième signal d'identification indicatif du fait qu'un décodage des premières données est réussi ou non à la fin du décodage par la deuxième partie de décodage (15), et pour émettre le deuxième signal d'identification généré vers le dispositif d'émission de paquets, sur la base du résultat final de décodage par la deuxième partie de décodage (15).

3. Système de transmission en mode paquet sans fil,
**caractérisé en ce qu'**il comprend un dispositif d'émission de paquets sans fil selon la revendication 1 et un dispositif de réception de paquets sans fil selon la revendication 2.

4. Dispositif de réception de paquets selon la revendication 2,
**caractérisé en ce que** la vraisemblance de réussite est décidée sur la base du résultat de la partie des premières données par la première partie de décodage (14).

5. Dispositif de réception de paquets selon la revendication 2,
**caractérisé en ce que** la vraisemblance de réussite est décidée sur la base du résultat en faisant référence à un bit de contrôle, au résultat de décodage de l'indicateur de combinaison de format de transport, TFCI, ou au résultat de réception d'un motif connu pour décider si les données ont été reçues avec succès ou non par les moyens de réception (12).

6. Dispositif de réception de paquets selon la revendication 2,
**caractérisé en ce que** la vraisemblance de réussite est décidée sur la base d'informations de qualité concernant les données comprenant une valeur de corrélation des données obtenue par une exécution d'un désétalement, une intensité de champ de réception, un SIR et une distance par rapport à une amplitude idéale ou à une phase idéale au moment de multiples modulations reçues par les moyens de réception (12).

7. Dispositif de réception de paquets selon la revendication 2, **caractérisé en ce que** l'émission du premier signal d'identification est en outre déterminée en considérant une capacité de traitement des première et deuxième parties de décodage (14, 15).
